(19) Europäisches Patentamt
European Patent Office
Office européen des brevets

(11) EP 3 103 062 B1

(12) **FASCICULE DE BREVET EUROPEEN**

(45) Date de publication et mention
de la délivrance du brevet:
**29.11.2023 Bulletin 2023/48**

(21) Numéro de dépôt: **15705929.6**

(22) Date de dépôt: **05.02.2015**

(51) Classification Internationale des Brevets (IPC):
**G06V 20/10** (2022.01)     **G06V 10/80** (2022.01)

(52) Classification Coopérative des Brevets (CPC):
**G06V 20/00; F41G 3/147; G01J 1/0219;
G01J 1/0242; G01J 1/0488; G01J 1/4228;
G01J 5/0066; G01J 5/025; G01J 5/0275;
G01J 5/602; G06T 7/74;** G01J 2005/0077

(86) Numéro de dépôt international:
**PCT/EP2015/052430**

(87) Numéro de publication internationale:
**WO 2015/118075 (13.08.2015 Gazette 2015/32)**

(54) **PROCEDE DE DETECTION ET DE CLASSIFICATION D'EVENEMENTS D'UNE SCENE**

VERFAHREN ZUR BESTIMMUNG UND KLASSIFIZIERUNG VON EREIGNISSEN IN EINER SZENE

METHOD FOR DETECTING AND CLASSIFYING EVENTS OF A SCENE

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **07.02.2014 FR 1400350**

(43) Date de publication de la demande:
**14.12.2016 Bulletin 2016/50**

(73) Titulaire: **THALES
92190 Meudon (FR)**

(72) Inventeurs:
• **MIDAVAINE, Thierry
F-75006 Paris (FR)**
• **GARIN, Olivier
F-78995 Elancourt (FR)**

(74) Mandataire: **Atout PI Laplace
Immeuble "Visium"
22, avenue Aristide Briand
94117 Arcueil Cedex (FR)**

(56) Documents cités:
• **MICHAEL Y. ENGEL ET AL: "Methodology for accurate multi-spectral signature measurement", PROCEEDINGS OF SPIE, vol. 7113, 1 octobre 2008 (2008-10-01), page 711312, XP055154940, ISSN: 0277-786X, DOI: 10.1117/12.800285**

• **ADAM D. DEVIR ET AL: "Fast multichannel radiometer for diagnosing munition flashes", PROCEEDINGS OF SPIE, vol. 6940, 3 avril 2008 (2008-04-03), pages 69401O-69401O-8, XP055154803, ISSN: 0277-786X, DOI: 10.1117/12.784275**

• **SHAVIT NADAV: "Uncooled infrared sensor technology for hostile fire indication systems", OPTICAL ENGINEERING, vol. 50, no. 6, 1 juin 2011 (2011-06-01), page 061012, XP055152996, ISSN: 0091-3286, DOI: 10.1117/1.3583567**

• **KASTEK MARIUSZ ET AL: "Analysis of multispectral signatures of the shot", SENSORS, AND COMMAND, CONTROL, COMMUNICATIONS, AND INTELLIGENCE (C3I) TECHNOLOGIES FOR HOMELAND SECURITY AND HOMELAND DEFENSE X, SPIE, 1000 20TH ST. BELLINGHAM WA 98225-6705 USA, vol. 8019, no. 1, 13 mai 2011 (2011-05-13) , pages 1-11, XP060014431, DOI: 10.1117/12.883923**

• **Anonymous: "Structure from motion - Wikipedia", , 30 January 2014 (2014-01-30), XP055657647, Retrieved from the Internet: URL:https://en.wikipedia.org/w/index.php?t itle=Structure_from_motion&oldid=593102711 [retrieved on 2020-01-14]**

## Description

Le domaine de l'invention est celui de la classification d'évènements dans une scène observée. Cette classification d'évènements entre dans le cadre de la détection de menaces avant tir ou après tir pour l'auto protection ou la protection collatérale de véhicules, de bateaux, d'aéronefs tels des hélicoptères ou avions, ou encore d'infrastructures militaires ou civiles.

Ces plateformes sont susceptibles d'être exposées à différents types de menaces qui peuvent provenir de toutes les directions dans 360° en azimut autour de la plateforme ou dans des domaines en angle solide de $2\pi$ stéradians ou plus (supra hémisphérique) pour des plateformes au sol ou encore $4\pi$ stéradians pour des plateformes aériennes. Ces menaces sont : des tirs de munitions, des illuminations laser, des systèmes de visées d'armements, les hommes qui les mettent en oeuvre (tireurs) ou les éventuelles plateformes où elles sont intégrées.

Plusieurs systèmes de type « Soft Kill » (neutralisation de la menace avant tir) ou « Hard Kill » (neutralisation de la menace après tir) intégrant des fonctions de détection de menaces, de moyens de réaction, de protection, ou de survie du véhicule ou de son équipage et de ripostes réclament des fonctions de détection temps réel à très court temps de réaction.
Aujourd'hui peu d'équipements sont proposés pour répondre à la diversité des menaces. Il existe toutefois :

- des détecteurs de départ de coup de canon (ou « HFI » acronyme de l'expression anglo-saxonne «Hostile Fire Indicator »), basés sur des solutions acoustiques, ou radar, ou infrarouge bande 2 ou MWIR (Mid Wave InfraRed 3 $\mu$m-5 $\mu$m) ou UV (Ultra Violet) ou encore une combinaison de ces techniques ;
- des détecteurs de tireurs isolés (« snipers ») basés sur des solutions acoustiques de détection de l'onde de bouche et de l'onde supersonique de la munition ou de détection par effet oeil de chat (DOP Détecteurs d'Optiques Pointées) de leur moyen de visée ;
- des détecteurs de départ de missile (DDM ou MWS Missile Warning Sensor) basés sur des détections Radar, UV ou MWIR ;
- des détecteurs d'alerte laser (ou DAL) basés sur des détections optiques sur les longueurs d'ondes des lasers employés pour les applications militaires.

On rencontre ces types de récepteur parfois sur des aéronefs de haute valeur tels que les avions de combat. Sur les véhicules blindés ils sont plus rares du fait des coûts unitaires de ces équipements et du coût de leur intégration dans un système de protection comparé à la valeur de la plateforme.

Les DAL ou les DDM sont depuis plus de 20 ans sur le marché et n'ont pas trouvé de réels débouchés sur les véhicules terrestres.

Quelques sociétés proposent des équipements à différents stades de maturité pour la détection de départ de missiles ou de coup de canon basés sur des techniques associant N cameras par exemple 4 couvrant chacune un secteur en gisement de 90° pour assurer la couverture à 360°. Ces réseaux de N cameras distribuées et synchronisées restent des solutions coûteuses et complexes en intégration et de fait inabordables. De fait, aujourd'hui la plupart des véhicules blindés sont dépourvus de moyens de protection en dehors de leur blindage. En effet, dans le domaine terrestre les solutions existantes ne sont pas satisfaisantes essentiellement du fait des coûts et de la difficulté de faire un système de protection complet. En effet il est inutile de détecter des menaces si on ne sait pas engager une réaction assurant la neutralisation de la menace ou de ses effets et permettant d'assurer la survie de l'équipage, de la plateforme ou encore d'assurer la poursuite de la réalisation de la mission.

La publication « Methodology for accurate multi-spectral signature measurement » de Engel et al (Proc. SPIE Vol 7113, 2008) décri une mesure, effectuée par un radiomètre multispectral, permettant d'obtenir, à partir du signal détecté, une signature d'une cible (en W/str/$\mu$m) sur un pixel unique.

La publication « Fast Multi Channel Radiometer for diagnosing munitions flashes » de Devir et al (Proc. SPIE Vol 6940, 2008) décrit un radiomètre multispectral dont chaque détecteur présente un pixel unique et une optique associée.

Le but de l'invention est de pallier ces inconvénients.

Plus précisément l'invention a pour objet un procédé de détection et de classification d'évènements de type menaces de tir d'une scène tel que défini dans la revendication indépendante 1 .

Grâce à ce procédé, le détecteur VisPIR permet d'assurer la fonction de base de vision haute résolution jour et nuit mais aussi des fonctions complémentaires de détection, localisation angulaire et classification des évènements (ou menaces) ou de rejection de fausses alarmes, par l'emploi conjoint d'un (ou de plusieurs) détecteurs(s) de type SWIR éventuellement multispectral(aux) et en déterminant des attributs de durée, de température et d'intensité de ces évènements.

Selon une variante on détermine la luminance de l'évènement en bande SWIR, et on classifie l'évènement aussi en fonction de sa luminance dans le domaine SWIR.

Dans la bande visible-proche IR, il est également possible de mesurer la luminance apparente associée à l'évènement. Ces deux luminances SWIR et Vis-PIR permettent d'estimer la température de l'événement (déjà estimée comme indiqué précédemment) avec plus de précision. De plus en ayant estimé la distance de l'évènement on peut estimer sa dimension, son intensité et son énergie totale.

De préférence, on incruste l'événement sur l'image VisPIR affichée, éventuellement assorti de la distance associée. Il peut être incrusté en réalité augmentée par l'incrustation d'une symbologie par exemple un réticule coloré avec des données associées. Cette information de distance permet de rendre plus robuste la classification de la menace détectée, d'évaluer son degré de menace ou de priorité et d'évaluer si nous sommes à portée de létalité de cette menace et d'engager éventuellement une riposte adaptée de manière automatique ou supervisée par un opérateur (mouvement, masquage par tir de fumigène, riposte pour neutraliser le poste de tir menaçant, riposte pour neutraliser la munition par exemple).

Selon une caractéristique de l'invention, l'unité de traitement est reliée à un système de gestion d'un évènement et le procédé de détection et de classification comporte en outre une étape de déclenchement de ce système de gestion à partir de l'évènement classifié et de sa distance.

L'invention a aussi pour objet un produit programme d'ordinateur, ledit programme d'ordinateur comprenant des instructions de code permettant d'effectuer les étapes du procédé tel que décrit, lorsque ledit programme est exécuté sur un ordinateur.

Et l'invention a également pour objet un système de détection et de classification d'évènements d'une scène, qui comprend :

- un système d'imagerie monopupille de la scène, monté sur une plateforme mobile et équipé de plusieurs détecteurs dont un détecteur visible-proche IR et un détecteur SWIR,
- une unité de traitement reliée aux détecteurs,
- un dispositif d'affichage relié à l'unité de traitement,

caractérisé en ce que l'unité de traitement comprend des moyens de mise en oeuvre du procédé de détection et de classification tel que décrit.

D'autres caractéristiques et avantages de l'invention apparaîtront à la lecture de la description détaillée qui suit, faite à titre d'exemple non limitatif et en référence aux dessins annexés dans lesquels :

la figure 1 représente schématiquement un exemple de système utilisé pour mettre en oeuvre le procédé selon l'invention,
la figure 2 représente un exemple d'organigramme des étapes du procédé selon l'invention,
les figures 3 sont des exemples d'images obtenues par le détecteur SWIR (fig 3a), par le détecteur Vis-PIR sans incrustation (fig 3b) et avec incrustation (fig 3c) d'un évènement détecté sur l'image SWIR assortie de la distance associée à cet évènement,
la figure 4 présente un exemple d'image SWIR agrandie d'un évènement résolu,
la figure 5 montre un exemple de classification de menace déterminée en fonction de ses attributs.

D'une figure à l'autre, les mêmes éléments sont repérés par les mêmes références.

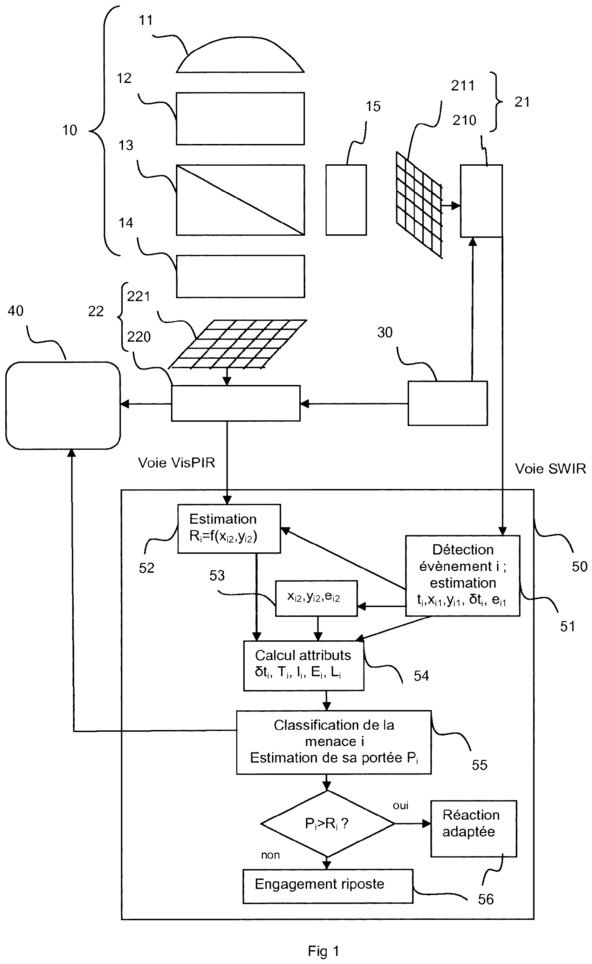

Le procédé de détection et de classification selon l'invention est mis en oeuvre au moyen d'un système d'imagerie monopupille que l'on peut voir figure 1, comportant une optique 10 conçue pour accueillir au moins deux plans focaux avec pour l'un un détecteur 22 visible - PIR (0,6 $\mu$m- 1,1 $\mu$m ou encore 0,4$\mu$m-1,1$\mu$m en englobant le domaine visible) et pour l'autre un détecteur 21 en Bande 1 ou SWIR (0,9 $\mu$m-1,7 $\mu$m). Cette optique est de préférence conçue pour former sur chaque détecteur une image panoramique de la scène à observer ; elle comporte un module de tête 11 à champ hémisphérique voire plus, suivi d'éléments optiques 12 de formation des images, d'un séparateur dichroïque 13 et sur chaque voie spectrale, une optique d'adaptation 14 et 15. On utilise par exemple une combinaison catadioptrique (miroirs et dioptres en verres) pour lui permettre de fonctionner dans une très large bande spectrale Visible, Proche IR (NIR) et Bande 1 (SWIR). L'emploi d'une optique commune aux deux détecteurs permet d'éviter l'effet de parallaxe sur les images issues de ces détecteurs.

Le détecteur matriciel SWIR 21 par exemple à base d'InGaAs a typiquement comme format de la matrice 320 lignes $\times$ 256 colonnes au pas de 30$\mu$m avec une cadence image de 400 Hz ou 640 lignes $\times$512 colonnes au pas de 15$\mu$m avec une cadence image de 300 Hz, qui correspondent à l'état de l'art actuel. Ce détecteur a typiquement une résolution spatiale de 4 mrd pour un pixel avec le format 640$\times$512. Des formats plus grands peuvent être envisagés. Toutefois le besoin de cadence image et de réponse temporelle pour la classification des menaces qui sont pour la plus part très brèves (durée généralement <100 ms) réclament des cadences d'acquisition égales ou supérieures à 200Hz voire 1000Hz si on cherche à classifier des petits calibres. Le détecteur intègre son circuit de lecture et de multiplexage dit ROIC (acronyme de l'expression anglo-saxonne « Read Out Integrated Circuit »).

Les pixels sont munis d'un ou de plusieurs filtres adaptés tels que:

- Un filtre unique sur l'ensemble de la matrice de pixels 211 laissant passer simultanément une bande étroite autour de 1,064$\mu$m et une bande large au-dessus de 1,4 $\mu$m jusque la longueur d'onde de coupure du détecteur par exemple 1,7$\mu$m ou au-delà.
- Plusieurs filtres différents adaptés chacun à un pixel par exemple sur un pavage 2$\times$2 avec :

  ◦ Une sous bande pour la détection des signatures de départ de coup (1,4 - 1,7 $\mu$m)
  ◦ Des bandes étroites accordées sur les raies laser (1,06 $\mu$m, 1,5 $\mu$m, ...)

Le circuit de lecture ou ROIC est relié à une électronique de proximité (ou E-prox) 210 du détecteur ; le ROIC et/ou l'E-prox intègrent des fonctions particulières telles que par exemple :

- Une lecture haute cadence supérieure à 200Hz ou inférieure à 5ms de période et de temps d'intégration sans temps mort ; le temps d'intégration est égal ou très proche de la période d'acquisition des trames images.

- Une haute dynamique (mode HDR acronyme de l'expression anglo-saxonne High Dynamic Range) pouvant être réalisée de différentes manières : bi-pente, réponse non linéaire logarithmique ou en racine par exemple, reset avant saturation décompté...

Un détecteur Silicium CMOS est par exemple utilisé comme détecteur visible 22. Il a une haute résolution spatiale (par exemple 1 mrd pour 1 pixel) et fonctionne à une cadence de 25 Hz ou plus généralement comprise entre 25 Hz et 100Hz. On peut citer comme exemple d'un tel détecteur une matrice 221 CMOS 4T ou 5T (à 4 ou 5 transistors dans le pixel) à faible bruit et amplification et conversion analogique digitale parallèle par colonne tel un s-CMOS (scientifique CMOS). Le détecteur CMOS 221 intègre son circuit de lecture et de multiplexage (ou ROIC) qui est relié à l'électronique de proximité (ou E-prox) 220 du détecteur. Cette électronique de proximité associée au ROIC réalise toutes les opérations de conversion analogique numérique et de restauration du signal (NUC Non Uniformity Corrections) pour permettre d'exploiter les images acquises avec le maximum de performance de jour comme de nuit. Il est relié à un dispositif d'affichage 40 de manière à assurer une fonction de vision de la scène pour un opérateur. L'image visible 42 est affichée mais pas nécessairement l'image SWIR 41.

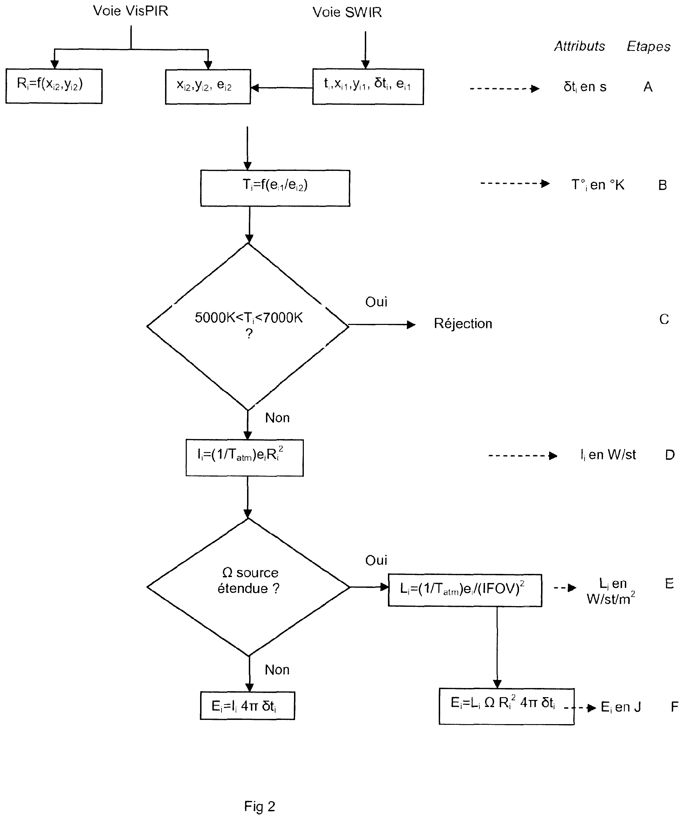

Ces détecteurs 22, 21 sont reliés à une unité de traitement 50 des images visible 42 et SWIR 41 respectivement obtenues par les deux détecteurs, apte à mettre en oeuvre les étapes suivantes décrites en relation avec la figure 1 et l'organigramme de la figure 2. Les menaces (ou évènements) se caractérisent par des signatures optiques sur les images acquises. Selon l'invention on détecte un évènement puis on définit quatre attributs à partir desquels seront classées ces signatures optiques.

Toutes les menaces se caractérisent par des signatures optiques très brèves et donc très difficilement discernables à l'œil par un opérateur regardant un écran ou même en vision directe du fait du domaine spectral d'émission ; leur détection doit donc être assurée par un traitement automatique.

Les profils temporels des signatures c'est-à-dire leur durée, et éventuellement temps de montée et profil de descente, constituent un premier attribut ; il est obtenu de la manière suivante.

Un évènement est tout d'abord détecté par des moyens de détection 51 et certaines de ses caractéristiques sont estimées de la manière suivante. Des images de la scène à observer dites images SWIR 41 sont acquises successivement par le détecteur SWIR. Des images de cette scène dites images VisPIR 42 sont simultanément acquises par le détecteur visible, ces images SWIR et VisPIR étant temporellement synchronisées entre elles au moyen d'une électronique 30 de pilotage et de synchronisation des détecteurs, et stockées en mémoire aux fins de la classification. Cette synchronisation peut résulter d'une acquisition d'images à la même cadence pour les deux détecteurs, mais les cadences sont généralement différentes comme mentionné précédemment.

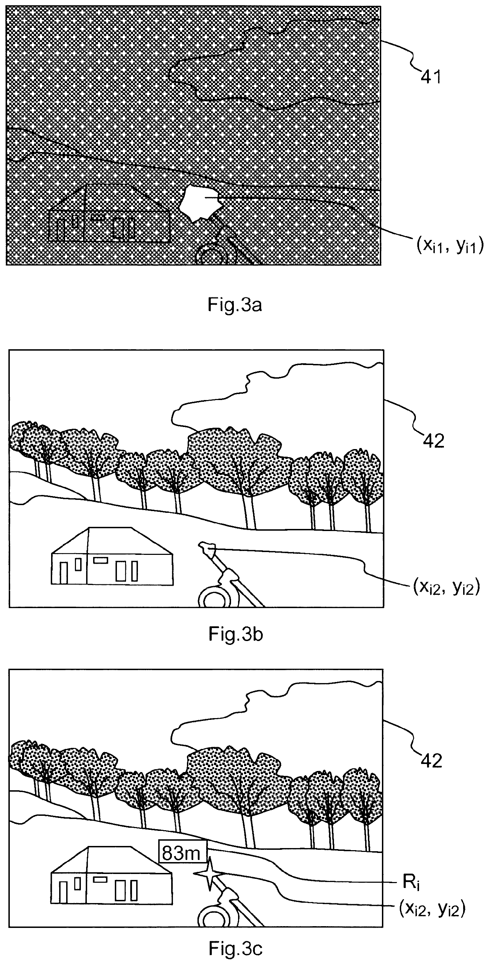

Les images SWIR 41 sont comparées entre elles pour déterminer pour chaque pixel $(x_{i1}, y_{i1})$ la variation d'éclairement SWIR. L'éclairement $e_{i1}$ est donné par le signal intégré sur le pixel sur lequel se forme l'image de la menace. Si cette variation d'éclairement est supérieure à un seuil prédéterminé ou adaptatif suivant les signatures des fonds spatiaux temporels, alors on considère qu'elle représente la signature SWIR d'un évènement : un évènement i est détecté comme montré figure 3a. Ce seuil d'éclairement est typiquement de 2 à 10 fois la variation de l'écart-type du fond suivant les probabilités de détection et les taux de fausse alarme souhaités à ce stade. On détermine ainsi un éclairement $e_{i1}$ en $W/m^2$ dans la bande spectrale de réception déterminée par le détecteur SWIR, son optique 15 et ses filtres éventuels.

Et on détermine sa durée $\delta t_i$ en secondes c'est-à-dire la durée pendant laquelle cette variation d'éclairement est supérieure à ce seuil. Cette durée $\delta t_i$ constitue donc le premier attribut de classification de l'évènement (étape A).

A partir de cette détection d'évènement réalisée dans le domaine SWIR, on va pouvoir mesurer sur les images VisPIR 42 le niveau de flux collecté de manière synchrone dans le même champ de vision. On procède de la manière suivante.

On détermine par des moyens 53, les coordonnées du pixel $(x_{i2}, y_{i2})$ correspondant à cet évènement dans les images VisPIR 42 synchronisées avec lesdites images SWIR. Lorsque les dimensions des images SWIR et VisPIR sont les mêmes, les coordonnées du pixel dans les images visibles sont identiques à celles des images SWIR ; on a $x_{i1} = x_{i2}$ et $y_{i1} = y_{i2}$. Si les images VisPIR sont plus résolues que les images SWIR du fait de la résolution spatiale du détecteur VisPIR supérieure à celle du détecteur SWIR comme dans l'exemple des figures 3, on détermine les coordonnées des pixels VisPIR en correspondance avec le pixel SWIR sur lequel est faite la détection. Cette opération de correspondance des pixels VisPIR et SWIR peut être réalisée en usine après intégration des matrices de détecteurs sur l'optique. Comme la détection est faite sur des pixels SWIR adjacents, on détermine la position de son barycentre et on localise les pixels VisPIR correspondant à ce barycentre. En réalisant la mesure du signal crête dans la bande VisPIR ou en sommant la contribution des pixels adjacents illuminés par l'évènement on détermine l'éclairement VisPIR de l'évènement $e_{i2}$ en W/m² dans la bande spectrale de ce récepteur. Il est possible que sur la voie VisPIR on ne puisse détecter l'évènement. Dans ce cas l'éclairement $e_{i2}$ et nul ou d'amplitude trop faible par rapport au bruit ou aux incertitudes pour être déterminé.

Pour ce pixel, on calcule le rapport $e_{i2}/e_{i1}$. Ce rapport d'éclairement VisPIR sur l'éclairement SWIR permet d'estimer une température $T_i$ (en K) de l'évènement (étape B), par les moyens de calcul des attributs 54. Cette température est le deuxième attribut de la signature optique. On utilise à cet effet une table prédéterminée qui permet d'établir une correspondance entre ces rapports d'éclairements et la température du corps noir ou du corps gris correspondant, en utilisant par exemple la loi de Planck dont on intègre la contribution pour les deux bandes spectrales SWIR et VisPIR en fonction de la température. Le signal numérique issu des deux voies est calibré en W/m² pour permettre d'avoir les mesures dans cette unité. Une autre manière de faire est de calibrer les détecteurs en mesurant le signal qu'ils délivrent en visant un corps noir de calibration en laboratoire.

Cette température est typiquement utilisée pour rejeter une source de fausse alarme constituée par le Soleil ou sa modulation ou sa diffusion par des nuages, ou encore sa réflexion par des miroirs, contours métalliques (tels ceux des fenêtres ou des panneaux de signalisation) ou encore par des réflexions sur l'eau. En effet, sur une plateforme mobile ces reflets solaires sont susceptibles de générer des signatures spatio-temporelles dans le domaine SWIR très proches de celles des munitions recherchées. Le Soleil ou ses reflets ayant une température de corps noir voisine de 5800K va générer une signature intense à plus courte longueur d'onde (dans le visible et le proche IR) beaucoup plus forte que celles associées aux signatures pyrotechniques des départs de coups ayant une température de corps noir inférieure à 2000 K. Ainsi la détection de signatures intenses dans le domaine visible ou proche IR permet de neutraliser les éventuelles détections dans le SWIR sur les pixels couvrant le même champ de vision instantané. Le niveau de flux collecté sur le détecteur visible permet via la température de valider la détection de l'évènement ou de la rejeter : pour une scène de jour, si la température est supérieure à un seuil (5000 K par exemple), alors cet évènement est une fausse alarme, sinon l'évènement est validé (étape C). Cet évènement validé peut en outre être incrusté sur l'image visible à l'attention de l'opérateur.

Cet attribut de température est avantageusement déterminé par l'unité de traitement parallèlement au premier attribut de durée.

Tous les engins à l'origine de ces menaces se caractérisent par des portées de létalité ou d'efficacité P au-delà de laquelle la menace n'est plus effective. Elles sont de la classe 100m pour un RPG ou une rocket anti char de courte portée, 500m à 8km pour des missiles anti char suivant leur type ou des tirs d'obus suivant leur calibre et leur charge.

Selon l'invention, l'unité de traitement comporte des moyens 52 d'estimation de la distance $R_i$ d'un point de l'image visible 42 (point objet de la scène- système d'imagerie).

Le système d'imagerie est installé à bord d'une plateforme, par exemple terrestre. En connaissant les directions sites et gisement dans le référentiel du détecteur VisPIR et en connaissant sa position en hauteur et en orientation par rapport à la plateforme ou mieux par rapport au sol (en exploitant les informations de position relative de la plateforme par rapport au sol) il est possible d'estimer la distance des points de l'image du sol en fonction de leur élévation apparente en faisant l'hypothèse d'un sol plan horizontal ou mieux en exploitant un modèle numérique de terrain (MNT) recalé par exemple par la position GPS du véhicule et par des données issues des images délivrées par le détecteur visible, permettant d'avoir un profil d'horizon ou par la localisation d'amers dans le champ de l'image. Lorsque la plateforme est fixe sur une infrastructure il est possible, lors de son installation, d'apparier à tous les points de l'image visible de la scène terrestre sa distance. Lorsque la plateforme est mobile, la mesure des vitesses angulaires des points caractéristiques de la scène est possible entre images VisPIR successives avec une bonne précision du fait de la résolution angulaire du système d'imagerie. Ce champ de vitesses angulaires dans toute la scène est appelé flot optique. Il permet de mesurer la ou les rotations du champ et la direction du vecteur vitesse de la plateforme (après dé rotation du champ), direction pour laquelle le flot optique est nul. Une grande couverture du champ angulaire du système d'imagerie panoramique permet d'assurer que la direction du vecteur vitesse de la plateforme est dans le champ d'observation et coïncide avec un pixel. En connaissant la vitesse de la plateforme, information délivrée par sa conduite et sa propulsion ou en exploitant les informations d'une centrale inertielle ou encore éventuellement mesurée en exploitant le flot optique au sol à courte distance, la mesure de la vitesse angulaire des éléments de la scène et la mesure de l'écart angulaire entre le pixel en coïncidence avec le vecteur vitesse de la plateforme et la direction associée à l'image d'un élément de la scène dont on estime une vitesse angulaire, permet d'estimer sa distance R.

On peut afficher en temps réel sur l'image visible 42 la distance $R_i$ associée à l'évènement i comme montré figure 3c ; l'évènement i est incrusté sur l'image visible en utilisant par exemple un symbole prédéterminé, tel qu'un réticule coloré. L'image SWIR 41 montrée figure 3a n'est généralement pas affichée.

A partir de cette distance et de l'éclairement visible obtenu pour cet évènement, on calcule par les moyens 54 son intensité $I_i$ (en W/sr) qui est le troisième attribut (étape D). En effet, on rappelle que l'amplitude de l'éclairement SWIR est dépendante de la distance R avec une loi en $1/R^2$ et de l'atténuation atmosphérique $T_{atm}$ qui va apporter un coefficient de transmission dépendant de la distance R. On a :

$$I_i = (1/T_{atm})e_i R_i^2.$$

Dans les images SWIR 41, les signatures optiques des sources sont soit résolues (étendues sur plusieurs pixels) soit non résolues (l'image de la source est formée sur un seul pixel) ou dans une situation intermédiaire très peu étendues par rapport au champ de vue instantané défini par la taille du pixel, la focale de l'optique et sa FTM (Fonction de Transfert de Modulation) dans la bande 1.

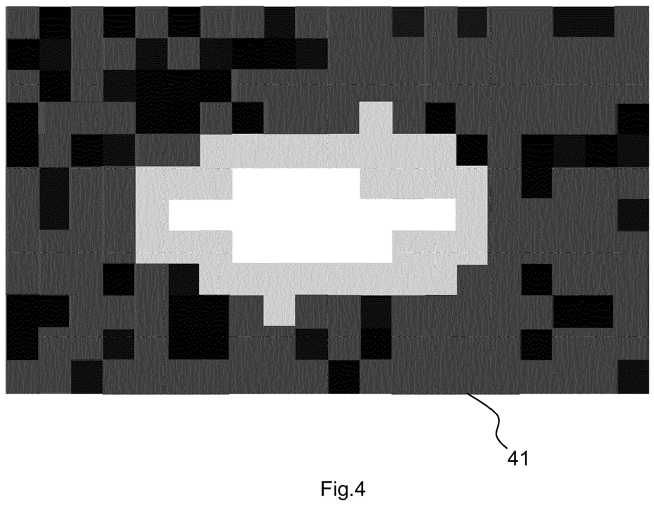

Lorsque la signature est résolue spatialement comme montré dans l'exemple de la figure 3 ou 4, l'éclairement $e_{i1}$ correspondant à l'amplitude du signal crête vu sur un pixel est déterminée par la luminance de la signature pendant le temps d'intégration (étape E), et obtenue par les moyens 54. Cette valeur constitue un quatrième attribut pour la classification de la menace. Cet attribut est très robuste car il n'est pas dépendant de la distance R par une loi en $1/R^2$ comme dans le cas de l'éclairement délivré par une source non résolue. Dans ce cas, la luminance $L_i$ en W/sr/m$^2$ de l'évènement est donnée par l'éclairement crête vu sur un pixel par la relation :

$$L_i = e_{i1}/[T_{atm}(IFOV)^2].$$

L'IFOV étant l'angle solide du champ de vue instantané du detecteur. Ou encore la luminance moyenne peut être donnée par l'intégration du signal $e_{i1}$ collecté par les pixels adjacents sur lesquels se forme l'image de la source divisée par l'angle solide $\Omega$ en stéradian sous lequel est vu l'évènement résolu. Du fait de la dépendance de l'éclairement reçu fonction de la distance R (loi en $1/R^2$), il ne constitue pas un attribut pour la classification de la menace. Seul le barycentre de cette signature a une signification en permettant de localiser angulairement en site et gisement dans le référentiel du détecteur SWIR ou dans le référentiel de la plateforme en connaissant le mouvement du premier par rapport au châssis si le système d'imagerie est monté sur un organe articulé sur la plateforme (tourelle, plateforme « pan and tilt »). On classifie alors cet évènement « résolu » en fonction de sa durée, de sa température, de son intensité et de sa luminance.

Enfin l'intensité de l'évènement ou sa luminance associée à sa dimension et à sa durée permettent d'estimer l'énergie $E_i$ (en J) de l'événement (étape F) qui peut être relié à une estimation de la portée de la menace et de sa munition. Ils sont calculés par les moyens 54.

Lorsque l'évènement i est résolu on a : $E_i = L_i \Omega R_i^2 4 \pi \delta t_i$,

Lorsque l'évènement n'est pas résolu on a : $E_i = I_j 4\pi \delta t_i$,

Ces quatre (si signature non résolue) ou cinq (si signature résolue) attributs permettent de réaliser par les moyens 55, une classification robuste de la menace.

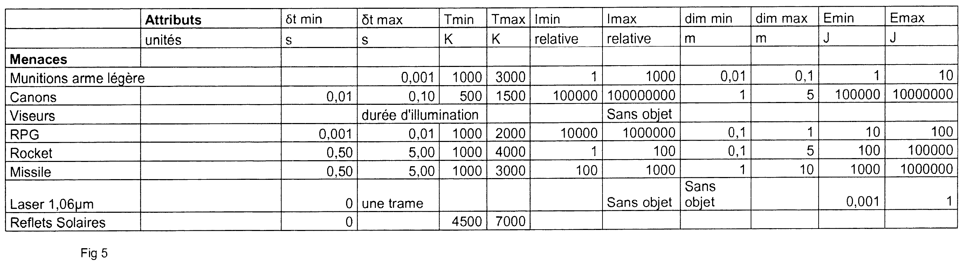

Lorsque l'évènement a été validé à partir de sa température ou plutôt n'a pas été considéré comme une fausse alarme, on le classifie alors à partir de sa durée, de sa température, de son intensité, de son énergie et éventuellement de sa luminance et de classes prédéterminées telles que montrées dans le tableau de la figure 5. Et on réitère ces étapes pour chaque autre pixel de l'image SWIR.

L'association de la classification de la menace et de l'estimation de la distance et de l'énergie de l'évènement permettent de décider si le système d'imagerie ou l'observateur se situe dans le domaine de létalité P de la menace et ainsi d'engager si nécessaire et si possible une riposte adaptée en temps réel. Cette riposte peut être déclenchée automatiquement par les moyens 56 de l'unité de traitement comme montré figure 1 ou manuellement par l'opérateur.

Ce procédé de détection et de classification peut notamment s'implémenter à partir d'un produit programme d'ordinateur, ce programme d'ordinateur comprenant des instructions de code permettant d'effectuer les étapes du procédé. Il est enregistré sur un support lisible par ordinateur, aussi utilisé pour synchroniser images SWIR et images visibles. Le support peut être électronique, magnétique, optique, électromagnétique ou être un support de diffusion de type infrarouge. De tels supports sont par exemple, des mémoires à semi-conducteur (Random Access Memory RAM, Read-Only Memory ROM), des bandes, des disquettes ou disques magnétiques ou optiques (Compact Disk - Read Only Memory (CD-ROM), Compact Disk - Read/Write (CD-R/W) et DVD).

**Revendications**

1. Procédé de détection et de classification d'évènements de type menaces de tir d'une scène au moyen d'un système d'imagerie monopupille monté sur une plateforme mobile et équipé de plusieurs détecteurs dont un détecteur dans la bande de longueurs d'onde 0,6 $\mu$m-1,1 $\mu$m dit détecteur VisPIR (22) et un détecteur dans la bande de longueurs d'onde 0,9 $\mu$m-1,7 $\mu$m dit détecteur SWIR (21), associé à une unité de traitement (50), qui comprend :

- une étape d'acquisition d'images 2D panoramiques successives de la scène issues du détecteur VisPIR dites images VisPIR (42) et d'images 2D successives de la scène issues du détecteur SWIR et synchronisées avec les images VisPIR, dites images SWIR (41), ladite acquisition desdites images étant réalisée avec ledit système d'imagerie monopupille commun audit détecteur VisPIR et au détecteur SWIR,
- une étape d'affichage des images VisPIR,
- une étape de traitement des images VisPIR et SWIR par l'unité de traitement, cette étape de traitement des images comportant les sous-étapes suivantes :

- comparer les images SWIR successives pour déterminer pour chaque pixel $(x_1,y_1)$ et des pixels voisins, la variation d'éclairement d'une image SWIR à l'autre et la valeur crête $e_1(t)$ de ces éclairements dits SWIR, si cette variation d'éclairement SWIR est supérieure à un seuil d'éclairement prédéterminé, alors la variation d'éclairement SWIR pendant laquelle ledit seuil est dépassé est désignée signature d'un évènement i et un évènement est associé au barycentre des pixels considérés, et :

- on détermine la date $t_i$ de l'évènement i
- on détermine la forme temporelle et la durée $\delta t_i$ de la signature de l'évènement (étape A),
- on détermine dans les images VisPIR synchronisées avec les images SWIR, les coordonnées du pixel $(x_2,y_2)$ et des pixels voisins correspondant au barycentre, ,

  ◦ on calcule la variation de l'éclairement d'une image VisPIR à l'autre et la valeur crête $e_2(t)$ de ces éclairements dits VisPIR, et on compare leurs valeurs crêtes $e_1(t)$ et $e_2(t)$ pour estimer une température de l'évènement à partir d'une table de correspondance prédéterminée (étape B),

  ▪ si la scène est une scène de jour et que la température est supérieure à un seuil de température, alors l'évènement est une fausse alarme (étape C) et on réitère les étapes précédentes avec un autre pixel,
  ▪ sinon,

  ◦ on estime la distance $R_i$ du point correspondant de la scène à partir de mesures de vitesses angulaires d'éléments de la scène, de la vitesse de la plateforme et des images VisPIR,
  ◦ on calcule l'intensité $I_i$ de l'événement i à partir de l'éclairement SWIR de ce pixel et à partir de cette distance $R_i$ (étape D),
  ◦ on estime l'énergie totale $E_i$ de

l'évènement à partir de la forme temporelle de la signature et de l'intensité $I_i$ (étape F),

  - on classifie l'évènement i en fonction de sa durée $\delta t_i$, de sa température $T_i$, de son intensité $I_i$ et de son énergie $E_i$,

  - à partir de la classification de l'évènement, de l'estimation de sa distance Ri et de son énergie Ei, on détermine si le système d'imagerie se situe dans un domaine de létalité de l'évènement, de manière à déclencher, une riposte,
  - on réitère les étapes précédentes pour un autre pixel des images SWIR.

2.  Procédé de classification d'évènements d'une scène selon la revendication précédente, **caractérisé en ce que** on détermine la luminance de l'évènement (étape E), et on classifie cet évènement aussi en fonction de sa luminance.

3.  Procédé de classification d'évènements d'une scène selon l'une des revendications précédentes, **caractérisé en ce qu'**on incruste l'évènement sur l'image VisPIR (42) affichée.

4.  Procédé de classification d'évènements d'une scène selon la revendication précédente, **caractérisé en ce qu'**on affiche la distance associée à l'évènement, sur l'image VisPIR (42) affichée.

5.  Procédé de classification d'évènements d'une scène selon l'une des revendications précédentes, **caractérisé en ce que** la riposte est déclenchée automatiquement ou manuellement par un opérateur.

6.  Un produit programme d'ordinateur, ledit programme d'ordinateur comprenant des instructions de code qui conduisent le système selon la revendication 7 à exécuter les étapes du procédé selon l'une quelconque des revendications 1 à 5.

7.  Système de détection et de classification d'évènements d'une scène, qui comprend :

    - un système d'imagerie monopupille de la scène, monté sur une plateforme mobile et équipé de plusieurs détecteurs dont un détecteur VisPIR (22) et un détecteur SWIR (21),
    - une unité de traitement (50) reliée aux détecteurs
    - un système de gestion d'évènements relié à l'unité de traitement et configuré pour être déclenché à partir de l'évènement classifié et de sa distance,un dispositif d'affichage (40) relié à l'unité de traitement,

**caractérisé en ce que** l'unité de traitement comprend des moyens de mise en oeuvre du procédé de détection et de classification selon l'une des revendications 1 à 5.

**Patentansprüche**

1. Verfahren zum Erkennen und Klassifizieren von Ereignissen vom Schussgefährdungstyp einer Szene mittels eines Einpupillen-Bildgebungssystems, das auf einer mobilen Plattform montiert und mit mehreren Detektoren ausgestattet ist, darunter ein Detektor im Wellenlängenband 0,6 $\mu$m - 1,1 $\mu$m, VisNIR-Detektor (22) genannt, und ein Detektor im Wellenlängenband 0,9 $\mu$m - 1,7 $\mu$m, SWIR-Detektor (21) genannt, assoziiert mit einer Verarbeitungseinheit (50), das Folgendes umfasst:

- einen Schritt des Erfassens von aufeinanderfolgenden 2D-Panoramabildern der Szene, die vom VisNIR-Detektor stammen, genannt VisNIR-Bilder (42), und von aufeinanderfolgenden 2D-Bildern der Szene, die vom SWIR-Detektor stammen und mit den VisNIR-Bildern, genannt SWIR-Bilder (41), synchronisiert sind, wobei die Erfassung der Bilder mit dem dem VisNIR-Detektor und dem SWIR-Detektor gemeinsamen Einpupillen-Bildgebungssystem durchgeführt wird,
- einen Schritt des Anzeigens der VisNIR-Bilder,
- einen Schritt des Verarbeitens der VisNIR- und SWIR-Bilder durch die Verarbeitungseinheit, wobei dieser Schritt der Bildverarbeitung die folgenden Unterschritte aufweist:
- Vergleichen der aufeinanderfolgenden SWIR-Bilder zum Bestimmen, für jedes Pixel $(x_1,y_1)$ und für benachbarte Pixel, der Änderung der Beleuchtungsstärke von einem SWIR-Bild zum anderen und des Spitzenwerts $e_1(t)$ dieser sogenannten SWIR-Beleuchtungen,

wenn diese SWIR-Beleuchtungsstärkeänderung größer ist als ein vorbestimmter Beleuchtungsschwellenwert, dann wird die SWIR-Beleuchtungsstärkeänderung, während der der Schwellenwert überschritten wird, als Signatur eines Ereignisses i bezeichnet und wird ein Ereignis mit dem Baryzentrum der betrachteten Pixel assoziiert, und:

- wird der Zeitpunkt $t_i$ des Ereignisses i bestimmt;
- werden die zeitliche Form und die Dauer $\delta t_i$ der Signatur des Ereignisses (Schritt A) bestimmt,
- werden in den mit den SWIR-Bildern synchronisierten VisNIR-Bildern, die Koordinaten des Pixels $(x_2,y_2)$ und der benachbarten Pixel entsprechend dem Baryzentrum bestimmt,

∘ werden die Veränderung der Beleuchtungsstärke von einem VisNIR-Bild zum anderen und der Spitzenwert $e_2(t)$ dieser sogenannten VisNIR-Beleuchtungsstärken berechnet, und werden ihre Spitzenwerte $e_1(t)$ und $e_2(t)$ zum Schätzen einer Temperatur des Ereignisses aus einer vorbestimmten Entsprechungstabelle (Schritt B) verglichen,

▪ wenn die Szene eine Tagesszene ist und die Temperatur über einem Temperaturschwellenwert liegt, dann ist das Ereignis ein Fehlalarm (Schritt C) und die vorherigen Schritte werden mit einem anderen Pixel wiederholt,
▪ andernfalls

∘ wird die Entfernung $R_i$ des entsprechenden Punktes der Szene auf der Basis von Winkelgeschwindigkeitsmesswerten von Elementen der Szene, der Geschwindigkeit der Plattform und der VisNIR-Bilder geschätzt,
∘ wird die Intensität $I_i$ des Ereignisses i auf der Basis der SWIR-Beleuchtungsstärke dieses Pixels und aus dieser Entfernung $R_i$ (Schritt D) berechnet,
∘ wird die Gesamtenergie $E_i$ des Ereignisses auf der Basis der zeitlichen Form der Signatur und der Intensität $I_i$ (Schritt F) geschätzt,

- wird das Ereignis i anhand seiner Dauer $\delta t_i$, seiner Temperatur $T_i$, seiner Intensität $I_i$ und seiner Energie $E_i$ klassifiziert,
- wird, auf der Basis der Klassifizierung des Ereignisses, der Schätzung seiner Entfernung $R_i$ und seiner Energie $E_i$, festgestellt ob sich das Bildgebungssystem in einem Letalitätsbereich des Ereignisses befindet, um eine Gegenreaktion auszulösen,
- werden die vorherigen Schritte für ein anderes Pixel der SWIR-Bilder wiederholt.

2. Verfahren zum Klassifizieren von Ereignissen einer Szene nach dem vorhergehenden Anspruch, **dadurch gekennzeichnet, dass** die Leuchtdichte des Ereignisses bestimmt (Schritt E) und dieses Ereignis auch in Abhängigkeit von seiner Leuchtdichte klassifiziert wird.

3. Verfahren zum Klassifizieren von Ereignissen einer Szene nach einem der vorhergehenden Ansprüche, **dadurch gekennzeichnet, dass** das Ereignis in das angezeigte VisNIR-Bild (42) eingeblendet wird.

4. Verfahren zum Klassifizieren von Ereignissen einer Szene nach dem vorhergehenden Anspruch, **dadurch gekennzeichnet, dass** die mit dem Ereignis assoziierte Entfernung auf dem angezeigten VisNIR-Bild (42) angezeigt wird.

5. Verfahren zum Klassifizieren von Ereignissen einer Szene nach einem der vorhergehenden Ansprüche, **dadurch gekennzeichnet, dass** die Gegenreaktion automatisch oder manuell durch einen Bediener ausgelöst wird.

6. Computerprogrammprodukt, wobei das Computerprogramm Codebefehle umfasst, die das System nach Anspruch 7 veranlassen, die Schritte des Verfahrens nach einem der Ansprüche 1 bis 5 auszuführen.

7. System zur Erkennung und Klassifizierung von Ereignissen einer Szene, das Folgendes umfasst:

- ein Einpupillen-Bildgebungssystem der Szene, das auf einer mobilen Plattform montiert und mit mehreren Detektoren ausgestattet ist, darunter ein VisNIR-Detektor (22) und ein SWIR-Detektor (21),
- eine Verarbeitungseinheit (50), die mit den Detektoren verbunden ist,
- ein Ereignismanagementsystem, das mit der Verarbeitungseinheit verbunden und so konfiguriert ist, dass es anhand des klassifizierten Ereignisses und seiner Entfernung ausgelöst wird, wobei eine Anzeigevorrichtung (40) mit der Verarbeitungseinheit verbunden ist,

**dadurch gekennzeichnet, dass** die Verarbeitungseinheit Mittel zur Durchführung des Erkennungs- und Klassifizierungsverfahrens nach einem der Ansprüche 1 bis 5 umfasst.

## Claims

1. A method for detecting and classifying events of firing threats type of a scene by means of a single-pupil imaging system mounted on a mobile platform and equipped with several detectors, including a detector in the 0.6 μm-1.1 μm wavelength band, called the VisNIR detector (22) and a detector in the 0.9 μm-1.7 μm wavelength band, called the SWIR detector (21), associated with a processing unit (50), which comprises:

- a step of acquiring successive panoramic 2D images of the scene, which arise from the VisNIR detector, called VisNIR images (42), and successive 2D images of the scene, which arise from the SWIR detector and are synchronised with the VisNIR images, called SWIR images (41), said acquisition of said images being carried out with said single-pupil imaging system shared by said VisNIR detector and the SWIR detector,
- a step of displaying the VisNIR images,
- a step of processing the VisNIR and SWIR images via the processing unit, this step of processing the images having the following substeps:
- comparing the successive SWIR images to determine, for each pixel $(x_1, y_1)$ and for neighbouring pixels, the variation in illumination from one SWIR image to another and the peak value $e_1(t)$ of these so-called SWIR illuminations,

if this variation in SWIR illumination is greater than a predetermined illumination threshold, then the variation in SWIR illumination during which said threshold is exceeded is designated as the signature of an event i and an event is associated with the barycentre of the pixels considered, and:

- the date $t_i$ of the event i is determined,
- the temporal shape and the duration $\delta t_i$ of the signature of the event are determined (step A),
- the coordinates of the pixel $(x_2, y_2)$ and of the neighbouring pixels corresponding to the barycentre are determined in the VisNIR images synchronised with the SWIR images,

  ○ the variation in the illumination from one VisNIR image to another and the peak value $e_2(t)$ of these so-called VisNIR illuminations are calculated, and their peak values $e_1(t)$ and $e_2(t)$ are compared to estimate a temperature of the event based on a predetermined lookup table (step B),

  ▪ if the scene is a daytime scene and the temperature is greater than a temperature threshold, then the event is a false alarm (step C) and the previous steps are repeated with another pixel,
  ▪ otherwise

  ○ based on measurements of angular velocities of elements of the scene, on the velocity of the platform, and on the VisNIR images, the distance $R_i$ of the corresponding point of the scene is estimated
  ○ the intensity $I_i$ of the event i is calculated based on the SWIR illumination of this pixel and based on this distance $R_i$ (step D),
  ○ the total energy $E_i$ of the event is estimated based on the temporal shape of the signature and of the intensity $I_i$ (step F),

- the event i is classified as a function of its du-

ration $\delta t_i$, its temperature $T_i$, its intensity $I_i$ and its energy $E_i$,

- based on the classification of the event, the estimation of its distance R; and its energy $E_i$, it is determined whether the imaging system is located within a lethality range of the event, so as to trigger retaliation,

- the previous steps are repeated for another pixel of the SWIR images.

2. The method for classifying events of a scene according to the preceding claim, **characterised in that** the luminance of this event is determined (step E), and this event is also classified as a function of its luminance.

3. The method for classifying events of a scene according to one of the preceding claims, **characterised in that** the event is embedded in the displayed Vis-NIR image (42).

4. The method for classifying events of a scene according to the preceding claim, **characterised in that** the distance associated with the event is displayed on the displayed VisNIR image (42).

5. The method for classifying events of a scene according to one of the preceding claims, **characterised in that** the retaliation is automatically triggered or manually triggered by an operator.

6. A computer program product, said computer program comprising code instructions causing the system according to claim 7 to perform the steps of the method according to any one of claims 1 to 5.

7. A system for detecting and classifying events of a scene, which comprises:

- a system for single-pupil imaging of the scene, mounted on a mobile platform and equipped with several detectors, including a VisNIR detector (22) and an SWIR detector (21),
- a processing unit (50) linked to the detectors,
- an event management system linked to the processing unit and configured to be triggered based on the classified event and its distance, a display device (40) linked to the processing unit,

**characterised in that** the processing unit comprises means for implementing the detection and classification method according to one of claims 1 to 5.

11

Voie VisPIR

Voie SWIR

Estimation
$R_i=f(x_{i2},y_{i2})$

52          53

$x_{i2},y_{i2},e_{i2}$

Détection
évènement i ;
estimation
$t_i,x_{i1},y_{i1},$ $\delta t_i,$ $e_{i1}$

50

51

Calcul attributs
$\delta t_i,$ $T_i,$ $I_i,$ $E_i,$ $L_i$          54

Classification de la
menace i
Estimation de sa portée $P_i$          55

$P_i>R_i$ ?

oui

non

Réaction
adaptée

Engagement riposte          56

Fig 1

Voie VisPIR                    Voie SWIR

|                                                    Attributs    Etapes

$R_i=f(x_{i2},y_{i2})$    $x_{i2},y_{i2}, e_{i2}$ ← $t_i,x_{i1},y_{i1}, \delta t_i, e_{i1}$    - - - - - →  $\delta t_i$ en s     A

$T_i=f(e_{i1}/e_{i2})$    - - - - - →  $T°_i$ en °K     B

5000K<$T_i$<7000K ?    Oui →  Réjection     C

Non

$I_i=(1/T_{atm})e_iR_i^2$    - - - - - →  $I_i$ en W/st     D

$\Omega$ source étendue ?    Oui →  $L_i=(1/T_{atm})e_i/(IFOV)^2$    - -→  $L_i$ en W/st/m$^2$     E

Non

$E_i=I_i\ 4\pi\ \delta t_i$        $E_i=L_i\ \Omega\ R_i^2\ 4\pi\ \delta t_i$    - -→  $E_i$ en J     F

Fig 2

41

$(x_{i1}, y_{i1})$

Fig.3a

42

$(x_{i2}, y_{i2})$

Fig.3b

42

83m

$R_i$

$(x_{i2}, y_{i2})$

Fig.3c

41

Fig.4

| | Attributs | δt min | δt max | Tmin | Tmax | Imin | Imax | dim min | dim max | Emin | Emax |
|---|---|---|---|---|---|---|---|---|---|---|---|
| | unités | s | s | K | K | relative | relative | m | m | J | J |
| **Menaces** | | | | | | | | | | | |
| Munitions arme légère | | | 0,001 | 1000 | 3000 | 1 | 1000 | 0,01 | 0,1 | 1 | 10 |
| Canons | | 0,01 | 0,10 | 500 | 1500 | 100000 | 100000000 | 1 | 5 | 100000 | 10000000 |
| Viseurs | | durée d'illumination | | | | | Sans objet | | | | |
| RPG | | 0,001 | 0,01 | 1000 | 2000 | 10000 | 1000000 | 0,1 | 1 | 10 | 100 |
| Rocket | | 0,50 | 5,00 | 1000 | 4000 | 1 | 100 | 0,1 | 5 | 100 | 100000 |
| Missile | | 0,50 | 5,00 | 1000 | 3000 | 100 | 1000 | 1 | 10 | 1000 | 1000000 |
| Laser 1,06µm | | 0 | une trame | | | | Sans objet | Sans objet | | 0,001 | 1 |
| Reflets Solaires | | 0 | | 4500 | 7000 | | | | | | |

Fig 5

## RÉFÉRENCES CITÉES DANS LA DESCRIPTION

### Littérature non-brevet citée dans la description

- **ENGEL et al.** Methodology for accurate multi-spectral signature measurement. *Proc. SPIE,* 2008, vol. 7113

- **DEVIR et al.** Fast Multi Channel Radiometer for diagnosing munitions flashes. *Proc. SPIE,* 2008, vol. 6940